(19) Europäisches Patentamt / European Patent Office / Office européen des brevets

(11) **EP 3 391 228 B1**

(12) **FASCICULE DE BREVET EUROPEEN**

(45) Date de publication et mention de la délivrance du brevet:
**21.07.2021 Bulletin 2021/29**

(51) Int Cl.:
*G06F 21/79* *(2013.01)*     *G06F 12/14* *(2006.01)*
*G06F 21/75* *(2013.01)*

(21) Numéro de dépôt: **16825854.9**

(22) Date de dépôt: **15.12.2016**

(86) Numéro de dépôt international:
**PCT/FR2016/053456**

(87) Numéro de publication internationale:
**WO 2017/103497 (22.06.2017 Gazette 2017/25)**

(54) **PROCÉDÉ D'ÉCRITURE DANS UNE MÉMOIRE NON-VOLATILE D'UNE ENTITÉ ÉLECTRONIQUE ET ENTITÉ ÉLECTRONIQUE ASSOCIÉE**

VERFAHREN ZUM SCHREIBEN IN EINEM NICHTFLÜCHTIGEN SPEICHER EINER ELEKTRONISCHEN EINHEIT UND ZUGEHÖRIGE ELEKTRONISCHE EINHEIT

METHOD FOR WRITING IN A NON-VOLATILE MEMORY OF AN ELECTRONIC ENTITY, AND RELATED ELECTRONIC ENTITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2015 FR 1562376**

(43) Date de publication de la demande:
**24.10.2018 Bulletin 2018/43**

(73) Titulaire: **IDEMIA France**
**92400 Courbevoie (FR)**

(72) Inventeurs:
• **BARBU, Guillaume**
**92700 Colombes (FR)**
• **ANDOUARD, Philippe**
**92700 Colombes (FR)**

(74) Mandataire: **Jacobacci Coralis Harle**
**32, rue de l'Arcade**
**75008 Paris (FR)**

(56) Documents cités:
**EP-A1- 2 164 031**     **EP-A1- 2 180 631**
**US-A1- 2009 113 217**     **US-A1- 2011 128 030**
**US-A1- 2011 145 595**     **US-A1- 2012 331 309**
**US-A1- 2013 145 177**

• **VEYRAT-CHARVILLON NICOLAS ET AL: "Shuffling against Side-Channel Attacks: A Comprehensive Study with Cautionary Note", 2 décembre 2012 (2012-12-02), CORRECT SYSTEM DESIGN; [LECTURE NOTES IN COMPUTER SCIENCE; LECT.NOTES COMPUTER], SPRINGER INTERNATIONAL PUBLISHING, CHAM, PAGE(S) 740 - 757, XP047328912, ISSN: 0302-9743 ISBN: 978-3-540-72913-6 page 1, ligne 1 - ligne 21**

## Description

DOMAINE TECHNIQUE AUQUEL SE RAPPORTE L'INVENTION

La présente invention concerne la protection des entités électroniques contre les attaques.

Elle concerne plus particulièrement un procédé d'écriture dans une mémoire non-volatile d'une entité électronique et une entité électronique associée.

L'invention s'applique particulièrement avantageusement dans le cas où il est prévu d'écrire une donnée représentative d'un type d'erreur dans la mémoire non-volatile lorsqu'une anomalie de fonctionnement est détectée.

ARRIERE-PLAN TECHNOLOGIQUE

On connaît du document EP 2 164 031 un procédé d'écriture dans une mémoire non-volatile d'une entité électronique comprenant les étapes suivantes :

- détermination d'un état de fonctionnement de l'entité électronique ;
- en cas de fonctionnement anormal, écriture d'une première donnée dans une première zone de la mémoire non-volatile ;
- en cas de fonctionnement normal, écriture d'une seconde donnée dans une seconde zone de la mémoire non-volatile.

L'écriture de la première donnée dans la première zone de la mémoire non-volatile permet de garder trace de la détection du fonctionnement anormal et éventuellement de conduire à un blocage du fonctionnement de l'entité électronique, par exemple lorsqu'un nombre prédéterminé d'anomalies de fonctionnement ont été détectées au cours des phases successives de fonctionnement de l'entité électronique.

L'écriture de la seconde donnée dans la seconde zone de la mémoire non-volatile vise à simuler l'écriture susmentionnée dans la première zone, de sorte qu'un attaquant ne puisse pas distinguer les cas de détection d'anomalie des cas de fonctionnement normal. L'attaquant cherche en effet à déceler une telle détection d'anomalie par l'entité électronique afin d'empêcher l'écriture de la première donnée et d'éviter ainsi un blocage de l'entité électronique.

Dans cette logique, le document EP 2 164 031 enseigne que l'écriture dans la première zone et l'écriture dans la seconde zone doivent avoir une signature identique quant à leur consommation électrique.

OBJET DE L'INVENTION

La présente invention est définie par les revendications indépendantes ci-jointes. Des caractéristiques avantageuses sont exposées dans les revendications dépendantes.

Dans ce contexte, la présente invention propose un procédé d'écriture tel que défini ci-dessus, caractérisé par une étape de détermination aléatoire d'un emplacement de la seconde zone parmi une pluralité d'emplacements de la seconde zone, ladite écriture de la donnée dans la seconde zone étant réalisée à l'emplacement déterminé.

Les inventeurs ont en effet constaté que l'écriture dans la première zone et l'écriture dans la seconde zone pouvaient produire des signaux (électriques ou électromagnétiques) observables différents, en particulier lorsque les routines bas-niveau d'écriture en mémoire non-volatile sont conçues sans tenir compte du souhait de produire des signaux observables constants.

On propose donc ici de provoquer une écriture à un emplacement à chaque fois différent (dans la seconde zone) lors du fonctionnement normal.

Ainsi, la différence observable entre écriture dans la première zone et écriture dans la seconde zone sera du même ordre que les différences observables entre écritures successives dans la seconde zone (à des emplacements à chaque fois différents) lors du fonctionnement normal de sorte qu'un attaquant ne pourra pas détecter l'écriture dans la première zone (dans le but d'interrompre cette écriture).

Un tel procédé d'écriture fait par exemple partie d'un procédé de traitement de données comprenant les étapes suivantes :

- réception d'une donnée par une interface de communication ;
- traitement de la donnée reçue.

Selon d'autres caractéristiques optionnelles (et donc non limitatives) :

- le traitement est un traitement cryptographique et/ou utilise une clé cryptographique mémorisée dans la mémoire non-volatile ;
- l'étape de détermination de l'état de fonctionnement comprend une vérification d'un résultat obtenu par ledit traitement ;
- l'étape de détermination de l'état de fonctionnement utilise un détecteur d'attaque ;
- la taille de la seconde zone est supérieure ou égale à la taille de la première zone ;
- la taille de la première zone est égale à la taille seconde zone ;
- la première donnée est représentative d'un type d'erreur.

L'invention propose également une entité électronique comprenant une mémoire non-volatile, un module de détermination d'un état de fonctionnement de l'entité électronique, et un module d'écriture en mémoire non-volatile conçu pour écrire une première donnée dans une première zone de la mémoire volatile en cas de fonctionnement anormal (c'est-à-dire lorsqu'un risque d'attaque est détecté) et pour écrire une seconde donnée dans une seconde zone de la mémoire volatile en cas de fonctionnement normal (c'est-à-dire en l'absence de détection d'un risque d'attaque), caractérisé en ce que le module d'écriture en mémoire non-volatile est conçu pour déterminer aléatoirement un emplacement de la seconde zone parmi une pluralité d'emplacements de la seconde zone et pour écrire la seconde donnée dans la seconde zone à l'emplacement déterminé.

Une telle entité électronique comprend par exemple un module de lecture en mémoire non-volatile conçu pour lire des données dans la première zone et un mécanisme de blocage apte à bloquer sélectivement le fonctionnement de l'entité électronique en fonction des données lues.

Lorsque l'entité électronique comprend un processeur (par exemple un microprocesseur), les modules et le mécanisme susmentionnés peuvent être mis en œuvre par des composants électroniques et/ou du fait de l'exécution, par le processeur, d'instructions de programme d'ordinateur mémorisées dans une mémoire (par exemple la mémoire non-volatile précitée) de l'entité électronique.

Par ailleurs, les caractéristiques optionnelles présentées ci-dessus en termes de procédé peuvent éventuellement s'appliquer à une telle entité électronique.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement les éléments principaux d'une entité électronique au sein de laquelle est mise en œuvre l'invention ; et
- la figure 2 est un logigramme présentant des étapes d'un procédé mis en œuvre au sein de l'entité électronique de la figure 1.

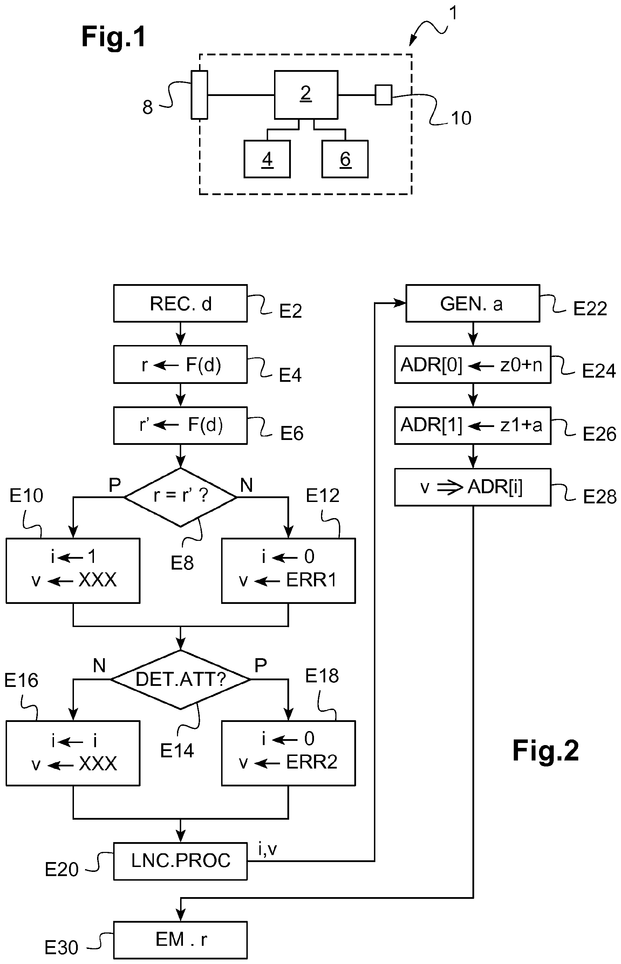

La figure 1 représente schématiquement les éléments principaux d'une entité électronique 1 au sein de laquelle est mise en œuvre l'invention.

Cette entité électronique est par exemple une carte à microcircuit, telle qu'une carte à circuit intégré universelle (ou UICC pour "*Universal Integrated Circuit Card*"). En variante, il pourrait s'agir d'un élément sécurisé (ou SE pour "*Secure Element*") - par exemple un microcontrôleur sécurisé, d'un dispositif électronique portatif (ou "*hand-held electronic device*" selon l'appellation anglosaxonne) - par exemple un terminal de communication ou un passeport électronique, ou d'un ordinateur.

L'entité électronique 1 comprend un microprocesseur 2, une mémoire vive 4 et une mémoire non-volatile 6. L'entité électronique 1 pourrait éventuellement comprendre en outre une mémoire morte.

La mémoire non-volatile 6 est par exemple une mémoire non-volatile réinscriptible (par exemple de type EEPROM pour "*Electrically Erasable and Programmable Read-Only Memory*", ou de type Flash), ou une mémoire non-volatile inscriptible une fois (par exemple de type OTP pour "*One-Time Programmable*").

La mémoire vive 4 et la mémoire non-volatile 6 (ainsi que le cas échéant la mémoire morte) sont chacune liées au microprocesseur 2 de sorte que le microprocesseur 2 peut lire ou écrire des données dans chacune de ces mémoires.

Une de ces mémoires, par exemple la mémoire non-volatile 6, mémorise des instructions de programme d'ordinateur qui permettent la mise en œuvre au sein de l'entité électronique 1, d'un procédé (tel que par exemple le procédé décrit ci-dessous en référence à la figure 2) lorsque ces instructions sont exécutées par le microprocesseur 2. Dans l'exemple décrit ici, ces instructions comprennent notamment des instructions d'un programme principal (qui correspond aux étapes E2 à 20 et E30 de la figure 2) et des instructions d'un sous-programme (qui correspond aux étapes E22 à E28 de la figure 2).

Les mémoires 4, 6 mémorisent également des données représentatives de variables utilisées lors de la mise en œuvre de divers procédés de traitement de données, notamment le procédé décrit ci-dessous en référence à la figure 2.

La mémoire non-volatile 6 comprend en outre une zone d'écriture sécuritaire Z0 et une zone d'écriture systématique Z1 utilisées comme décrit plus bas. Dans le mode de réalisation décrit ici, la zone d'écriture sécuritaire Z0 et la zone d'écriture systématique Z1 ont une taille identique, par exemple comprise entre 2 octets et une valeur prédéterminée dépendant de la politique de sécurité.

La zone d'écriture sécuritaire Z0 et la zone d'écriture systématique Z1 pourraient toutefois avoir en variante des tailles respectives distinctes l'une de l'autre. Dans un cas particulier, la zone d'écriture sécuritaire Z0 pourrait être limitée à 1 octet. La zone d'écriture systématique Z1 comprend quant à elle au moins 2 octets (soit au moins deux emplacements). On note L la longueur (en octets) de la zone d'écriture systématique Z1.

Lors du démarrage du fonctionnement de l'entité électronique 1 (par exemple consécutivement à sa mise sous tension), le microprocesseur 2 lit les données mémorisées dans la zone d'écriture sécuritaire Z0 et peut sélectivement, selon les données lues, bloquer son fonctionnement ou poursuivre son fonctionnement, par exemple en mettant en œuvre le procédé décrit ci-dessous en référence à la figure 2.

Le blocage du fonctionnement de l'entité électronique 1 est par exemple réalisé lorsque le microprocesseur 2 lit dans la zone d'écriture sécuritaire Z0 un octet ayant une valeur prédéterminée (dite *"donnée de blocage"* ou *"verrou"*). En variante, le blocage du fonctionnement de l'entité électronique 1 peut être réalisé lorsque le microprocesseur 2 lit dans la zone d'écriture sécuritaire Z0 un nombre prédéterminé de données (par exemple d'octets) correspondant chacune à un code d'erreur (mémorisé lors de phases antérieures de fonctionnement de l'entité électronique 1 comme décrit ci-dessous dans le cadre du procédé présenté en référence à la figure 2). On prévoit par exemple dans ce dernier cas qu'à chaque démarrage du fonctionnement de l'entité électronique 1, le microprocesseur 2 lise les octets mémorisés dans la zone d'écriture sécuritaire Z0 de manière à déterminer le nombre n de ces octets qui correspondent à un code d'erreur : le nombre n est mémorisé en mémoire vive 4 (voir son utilisation à l'étape E24 décrite plus bas) et le microprocesseur 2 provoque le blocage du fonctionnement de l'entité électronique 1 lorsque ce nombre n atteint (ou dépasse) un seuil prédéterminé.

Dans certains cas, le blocage du fonctionnement de l'entité électronique 1 peut être accompagné d'autres mesures de protection, par exemple l'effacement de certaines données au moins mémorisées dans la mémoire non-volatile 6.

L'entité électronique 1 comprend en outre une interface de communication 8 avec des dispositifs électroniques externes. Dans le cas décrit ici où l'entité électronique 1 est une carte à microcircuit, l'interface de communication 8 comprend par exemple des contacts affleurant sur une face de la carte à microcircuit. En variante, l'interface de communication 8 pourrait être réalisée par un module de communication sans contact. De manière générale, l'interface de communication 8 peut être un module de communication (filaire ou sans fil) avec une autre entité électronique.

Le microprocesseur 2 peut ainsi recevoir des données d en provenance de l'autre entité électronique via l'interface de communication 8, traiter ces données d au moyen d'un algorithme de traitement (par exemple un algorithme cryptographique) afin d'obtenir un résultat r, et émettre ce résultat r à destination de l'autre entité électronique via l'interface de communication 8.

L'entité électronique 1 comprend également un détecteur d'attaque 10 ; un tel détecteur d'attaque 10 est par exemple un capteur de lumière ou, en variante, un détecteur de perturbation dans l'alimentation électrique. De manière générale, il s'agit d'un composant matériel conçu pour détecter des attaques au cours desquels un attaquant cherche à provoquer une anomalie de fonctionnement de l'entité électronique, par exemple en dirigeant un rayonnement laser sur l'entité électronique 1 (attaque détectable au moyen du capteur de lumière précité) ou en perturbant l'alimentation électrique des composants au sein de l'entité électronique 1.

La figure 2 représente, sous forme de logigramme, un exemple de procédé conforme à l'invention.

Ce procédé débute à l'étape E2 à laquelle le microprocesseur 2 reçoit des données d via l'interface de communication 8.

Le microprocesseur 2 procède alors à l'étape E4 au traitement des données reçues d. Un tel traitement est par exemple l'application aux données d d'un algorithme cryptographique utilisant une clé cryptographique mémorisée dans la mémoire non-volatile 6.

On désigne par r les données obtenues par le traitement de l'étape E4 :
r = F(d), où F est la fonction mise en œuvre par le traitement de l'étape E4.

On prévoit ici en outre de réitérer à l'étape E6 le traitement effectué à l'étape E4 pour s'assurer que ce traitement a été réalisé sans anomalie.

Autrement dit, le microprocesseur effectue à l'étape E6 un traitement identique à celui effectué à l'étape E4 (ici l'application aux données d de l'algorithme cryptographique susmentionné utilisant la clé cryptographique précitée).

On désigne par r' les données obtenues par le traitement de l'étape E6 :

$$r' = F(d).$$

En fonctionnement normal (c'est-à-dire notamment lorsqu'aucune attaque par génération de faute n'a lieu), les données r et les données r' sont identiques ; ce n'est pas le cas en revanche si une anomalie s'est produite au cours de l'étape E4 ou de l'étape E6 (anomalie qui peut être générée par une attaque par faute).

On teste ainsi à l'étape E8 si les données r et les données r' sont identiques.

On remarque qu'en variante, la réitération du traitement de l'étape E4 (étape E6) pourrait être remplacée par l'application aux données r du traitement inverse de celui effectué à l'étape E4 ; les données d' ainsi obtenues (d' = F⁻¹(r)) sont dans ce cas comparées aux données d (en remplacement du test de l'étape E8) pour vérification du fonctionnement normal.

S'il est déterminé à l'étape E8 que les données r et les données r' sont identiques (flèche P), le microprocesseur 2 met (étape E10) une variable i à la valeur 1 et une variable v à une valeur quelconque (notée XXX en figure 2), par exemple une valeur prédéfinie.

Le procédé se poursuit ensuite à l'étape E14 décrite plus bas.

S'il est déterminée à l'étape E8 que les données r et les données r' ne sont pas identiques (ce qui est le cas si une anomalie s'est produit au cours de l'étape E4 ou de l'étape E6), le microprocesseur 2 met (étape E12) une variable i à la valeur 0 et une variable v à une valeur prédéterminée ERR1 représentative d'un premier type d'erreur.

Le procédé se poursuit à l'étape E14 à laquelle le microprocesseur 2 détermine si une attaque a été détectée par le détecteur d'attaque 10.

Dans l'affirmative (flèche P), le microprocesseur 2 met (étape E18) une variable i à la valeur 0 et une variable v à une valeur prédéterminée ERR2 représentative d'un second type d'erreur. Le procédé se poursuit ensuite à l'étape E20 décrite plus bas.

Dans la négative (flèche N), le microprocesseur 2 mémorise dans la variable i la valeur précédemment stockée dans cette variable i et met une variable v à une valeur quelconque, par exemple prédéfinie (étape E16).

On remarque que la mémorisation dans la variable i de la valeur précédemment stockée dans cette même variable est au final sans effet sur le contenu de la variable i ; cette opération rend toutefois difficile pour un attaquant de distinguer, par des observations extérieures du fonctionnement de l'entité électronique 1, le cas où une attaque a été détectée (c'est-à-dire du fonctionnement en cas d'attaque) du cas de fonctionnement normal (fonctionnement en l'absence d'attaque).

Le procédé se poursuit également dans ce cas par l'étape E20.

Le microprocesseur 2 lance à l'étape E20 un processus d'écriture de la valeur contenue dans la variable v soit dans la zone d'écriture systématique Z1, soit dans la zone d'écriture sécuritaire Z0.

Dans l'exemple décrit ici, ce processus est mis en œuvre du fait de l'exécution d'un sous-programme représenté aux étapes E22 à E28. Les valeurs respectives de la variable i et de la variable v sont passées en paramètres lors de l'appel de ce sous-programme, comme schématiquement représenté en figure 2.

Du fait de l'exécution de ce sous-programme, le microprocesseur 2 génère à l'étape E22 un nombre aléatoire a compris entre 0 et L-1, où L est comme déjà indiqué la longueur (en octets) de la zone d'écriture systématique Z1 . En variante, le microprocesseur 2 peut recevoir un tel nombre aléatoire a en provenance d'un crypto-processeur équipant l'entité électronique 1.

Le microprocesseur 2 mémorise ensuite (étape E24), dans une première cellule ADR[0] d'un tableau ADR (mémorisé par exemple en mémoire vive 4), une valeur z0+n désignant une adresse au sein de la zone d'écriture sécuritaire Z0 (ou, autrement dit, l'adresse d'un emplacement de la zone d'écriture sécuritaire Z0), où on note z0 l'adresse (du premier emplacement) de la zone d'écriture sécuritaire Z0 et n le nombre d'octets déjà inscrits dans la zone sécuritaire lors de phases antérieures de fonctionnement de l'entité électronique 1 (le nombre n étant par exemple déterminé au démarrage du fonctionnement de l'entité électronique 1 et mémorisé en mémoire vive 4 comme indiqué plus haut).

Le microprocesseur 2 mémorise également (étape E26), dans une seconde cellule ADR[1] du tableau ADR, une valeur z1+a désignant une adresse choisie aléatoirement au sein de la zone d'écriture systématique Z1 (ou, autrement dit, l'adresse d'un emplacement choisi de manière aléatoire parmi les L emplacements de la zone d'écriture systématique Z1), où on note z1 l'adresse (du premier emplacement) de la zone d'écriture systématique Z1.

Le microprocesseur 2 commande alors à l'étape E28 l'écriture de la valeur v dans la mémoire non-volatile 6 à l'adresse désignée par la valeur mémorisée dans la cellule ADR[i] : la valeur v est inscrite dans la mémoire non-volatile 6 à l'adresse mémorisée dans la première cellule ADR[0] du tableau ADR si la variable i vaut 0, ou bien à l'adresse mémorisée dans la seconde cellule ADR[1] du tableau ADR si la variable i vaut 1. On peut prévoir par ailleurs que, lorsque la variabe i vaut 0, le microprocesseur 2 incrémente le nombre n mentionné plus haut (mémorisé en mémoire vive 4).

Ainsi, s'il a été déterminé au cours des étapes E8 et E14 qu'un risque d'attaque était présent (auquel cas la variable i a été mise à 0 à l'étape E12 ou à l'étape E18), l'étape E28 provoque l'écriture d'une valeur représentative d'un type d'erreur dans la zone d'écriture sécuritaire Z0.

Dans les autres cas (c'est-à-dire en fonctionnement normal et donc, *a priori,* en l'absence d'attaque), l'étape E28 provoque l'écriture d'une valeur quelconque dans la zone d'écriture systématique Z1, à un emplacement déterminé à chaque fois de manière aléatoire parmi les différents emplacements de la zone d'écriture systématique Z1.

Ainsi, les signaux électriques et/ou électromagnétiques générés lors de cette écriture et observables par un attaquant varient d'une écriture à l'autre dans la zone d'écriture systématique Z1.

La mise en œuvre d'une écriture dans la zone d'écriture sécuritaire Z0 provoquerait une variation des signaux observables du même ordre et ne pourrait donc pas être distinguée des écritures en zone d'écriture systématique Z1 par un attaquant, qui ne pourrait ainsi pas interrompre (par exemple en coupant l'alimentation électrique de l'entité électronique 1) l'écriture en zone d'écriture sécuritaire Z0.

Les valeurs représentatives d'un type d'erreur (pouvant conduire au blocage de l'entité électronique 1) sont ainsi correctement inscrites dans la zone d'écriture sécuritaire Z0.

Une fois l'écriture en mémoire non-volatile effectuée à l'étape E28, le processus lancé à l'étape E20 est terminé et le procédé se poursuit (ici par retour au programme principal) à l'étape E30, à laquelle l'entité électronique 1 émet par exemple le résultat r obtenu à l'étape E4 via l'interface de communication 8.

## Revendications

1. Procédé d'écriture dans une mémoire non-volatile (6) d'une entité électronique (1) comprenant les étapes suivantes :

   - détermination (E8 ; E14) d'un état de fonctionnement de l'entité électronique (1) ;
   - en cas de fonctionnement anormal, écriture (E12, E18, E24, E28) d'une première donnée (ERR1 ; ERR2) dans une première zone de la mémoire non-volatile (6) afin de garder trace dudit fonctionnement anormal ;
- en cas de fonctionnement normal, écriture (E10, E16, E26, E28) d'une seconde donnée dans une seconde zone de la mémoire non-volatile (6) afin de simuler l'écriture susmentionnée dans la première zone de la mémoire non-volatile (6),

**caractérisé par** une étape de détermination aléatoire (E22, E26) d'un emplacement de la seconde zone parmi une pluralité d'emplacements de la seconde zone, ladite écriture (E10, E16, E26, E28) de la donnée dans la seconde zone étant réalisée à l'emplacement déterminé.

2. Procédé d'écriture selon la revendication 1, comprenant les étapes suivantes :

   - réception (E2) d'une donnée (d) par une interface de communication (8) ;
   - traitement (E4) de la donnée (d) reçue.

3. Procédé d'écriture selon la revendication 2, dans lequel le traitement (E4) est un traitement cryptographique.

4. Procédé d'écriture selon la revendication 2 ou 3, dans lequel le traitement (E4) utilise une clé cryptographique mémorisée dans la mémoire non-volatile (6).

5. Procédé d'écriture selon l'une des revendications 2 à 4, dans lequel l'étape de détermination de l'état de fonctionnement comprend une vérification (E8) d'un résultat (r) obtenu par ledit traitement (E4).

6. Procédé d'écriture selon l'une des revendications 1 à 5, dans lequel l'étape de détermination de l'état de fonctionnement utilise un détecteur d'attaque (10).

7. Procédé d'écriture selon l'une des revendications 1 à 6, dans lequel la taille de la seconde zone est supérieure ou égale à la taille de la première zone.

8. Procédé d'écriture selon l'une des revendications 1 à 7, dans lequel la première donnée (ERR1 ; ERR2) est représentative d'un type d'erreur.

9. Entité électronique (1) comprenant :

   - une mémoire non-volatile (6) ;
   - un module de détermination d'un état de fonctionnement de l'entité électronique ; et
   - un module d'écriture en mémoire non-volatile conçu pour écrire une première donnée (ERR1 ; ERR2) dans une première zone de la mémoire volatile (5) en cas de fonctionnement anormal afin de garder trace dudit fonctionnement anormal, et pour écrire une seconde donnée dans une seconde zone de la mémoire volatile (6) en cas de fonctionnement normal afin de simuler l'écriture susmentionnée dans la première zone de la mémoire non-volatile (6),

**caractérisé en ce que** le module d'écriture en mémoire non-volatile est conçu pour déterminer aléatoirement un emplacement de la seconde zone parmi une pluralité d'emplacements de la seconde zone et pour écrire la seconde donnée dans la seconde zone à l'emplacement déterminé.

10. Entité électronique selon la revendication 9, comprenant un module de lecture en mémoire non-volatile conçu pour lire des données dans la première zone et un mécanisme de blocage apte à bloquer sélectivement le fonctionnement de l'entité électronique (1) en fonction des données lues.

**Patentansprüche**

1. Verfahren zum Schreiben in einem nichtflüchtigen Speicher (6) einer elektronischen Einheit (1), das die folgenden Schritte aufweist:

   - Bestimmen (E8; E14) eines Betriebszustands der elektronischen Einheit (1),
   - im Falle eines unnormalen Betriebs, Schreiben (E12, E18, E24, E28) eines ersten Datums (ERR1; ERR2) in einer ersten Zone des nichtflüchtigen Speichers (6), um eine Spur des unnormalen Betriebs aufzubewahren,
   - im Falle eines normalen Betriebs, Schreiben (E10, E16, E26, E28) eines zweiten Datums in einer zweiten Zone des nichtflüchtigen Speichers (6), um das vorstehend erwähnte Schreiben in der ersten Zone des nichtflüchtigen Speichers (6) zu simulieren,

   **gekennzeichnet durch** einen Schritt des zufälligen Bestimmens (E22, E26) eines Platzes der zweiten Zone unter einer Anzahl Plätzen der zweiten Zone, wobei das Schreiben (E10, E16, E26, E28) des Datums in der zweiten Zone am bestimmten Platz durchgeführt wird.

2. Verfahren zum Schreiben gemäß Anspruch 1 mit den folgenden Schritten:

   - Empfangen E2) eines Datums (d) über eine Kommunikationsschnittstelle (8),
   - Bearbeiten (E4) des empfangenen Datums (d).

3. Verfahren zum Schreiben gemäß Anspruch 2, bei dem das Bearbeiten (E4) ein kryptografisches Bearbeiten ist.

**4.** Verfahren zum Schreiben gemäß Anspruch 2 oder 3, bei dem das Bearbeiten (E4) einen im nichtflüchtigen Speicher (6) gespeicherten kryptografischen Schlüssel verwendet.

**5.** Verfahren zum Schreiben gemäß einem der Ansprüche 2 bis 4, bei dem der Schritt des Bestimmens des Betriebszustands eine Überprüfung (E8) eines durch das Bearbeiten (E4) erhaltenen Ergebnisses (r) aufweist.

**6.** Verfahren zum Schreiben gemäß einem der Ansprüche 1 bis 5, bei dem der Schritt des Bestimmens des Betriebszustands einen Angriffsdetektor (10) verwendet.

**7.** Verfahren zum Schreiben gemäß einem der Ansprüche 1 bis 6, bei dem die Größe der zweiten Zone größer als oder gleich der Größe der ersten Zone ist.

**8.** Verfahren zum Schreiben gemäß einem der Ansprüche 1 bis 7, bei dem das erste Datum (ERR1; ERR2) für einen Fehlertyp steht.

**9.** Elektronische Einheit (1) mit

- einem nichtflüchtigen Speicher (6),
- einem Modul zum Bestimmen eines Betriebszustands der elektronischen Einheit und
- einem Modul zum Schreiben in einem nichtflüchtigen Speicher, das dazu ausgelegt ist, im Falle eines unnormalen Betriebs ein erstes Datum (ERR1; ERR2) in einer ersten Zone des flüchtigen Speichers (5) zu schreiben, um eine Spur des unnormalen Betriebs aufzubewahren, und um im Falle eines normalen Betriebs ein zweites Datum in einer zweiten Zone des flüchtigen Speichers (6) zu schreiben, um das vorstehend erwähnte Schreiben in der ersten Zone des nichtflüchtigen Speichers (6) zu simulieren,

**dadurch gekennzeichnet, daß** das Modul zum Schreiben in einem nichtflüchtigen Speicher dazu ausgelegt ist, einen Platz der zweiten Zone unter einer Anzahl Plätzen der zweiten Zone zu bestimmen und das zweite Datum in der zweiten Zone am bestimmten Platz zu schreiben.

**10.** Elektronische Einheit gemäß Anspruch 9, die ein Modul zum Lesen im nichtflüchtigen Speicher, das dazu ausgelegt ist, Daten in der ersten Zone zu lesen, und einen Sperrmechanismus, der geeignet ist, den Betrieb der elektronischen Einheit (1) in Abhängigkeit von den gelesenen Daten wahlweise zu blockieren, aufweist.

**Claims**

**1.** Method of writing in a non-volatile memory (6) of an electronic entity (1) comprising the following steps:

- determining (E8; E14) an operating state of the electronic entity (1);
- in the event of abnormal operation, writing (E12, E18, E24, E28) a first datum (ERR1; ERR2) in a first area of the non-volatile memory (6) in order to keep track of said abnormal operation;
- in the event of normal operation, writing (E10, E16, E26, E28) a second datum in a second area of the non-volatile memory (6) in order to simulate the above-mentioned writing in the first area of the non-volatile memory (6),

**characterised by** a step of randomly determining (E22, E26) a location of the second area from among a plurality of locations of the second area, said writing (E10, E16, E26, E28) of the datum in the second area being carried out at the determined location.

**2.** Method of writing according to claim 1, comprising the following steps:

- receiving (E2) a datum (d) via a communication interface (8);
- processing (E4) the datum (d) received.

**3.** Method of writing according to claim 2, wherein the processing (E4) is a cryptographic processing.

**4.** Method of writing according to claim 2 or 3, wherein the processing (E4) uses a cryptographic key stored in the non-volatile memory (6).

**5.** Method of writing according to one of claims 2 to 4, wherein the step of determining the operating state comprises a verification (E8) of a result (r) obtained by said processing (E4).

**6.** Method of writing according to one of claims 1 to 5, wherein the step of determining the operating state uses an attack detector (10).

**7.** Method of writing according to one of claims 1 to 6, wherein the size of the second area is greater than or equal to the size of the first area.

**8.** Method of writing according to one of claims 1 to 7, wherein the first datum (ERR1; ERR2) is representative of a type of error.

**9.** Electronic entity (1) comprising:

- a non-volatile memory (6);

- a module for determining an operating state of the electronic entity; and
- a module for writing in non-volatile memory designed for writing a first datum (ERR1; ERR2) in a first area of the volatile memory (5) in the event of abnormal operation in order to keep track of said abnormal operation, and for writing a second datum in a second area of the volatile memory (6) in the event of normal operation in order to simulate the above-mentioned writing in the first area of the non-volatile memory (6),

**characterised in that** the module for writing in non-volatile memory is designed for randomly determining a location of the second area from among a plurality of locations of the second area, and for writing the second datum in the second area at the determined location.

10. Electronic entity according to claim 9, comprising a module for reading in non-volatile memory designed for reading data in the first area and a locking mechanism capable of selectively locking the operation of the electronic entity (1) as a function of the data read.

# Fig.1

# Fig.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2164031 A